# FASCICULE DE BREVET EUROPEEN

(11) **EP 2 186 695 B1**
(45) Date de publication et mention de la délivrance du brevet: **07.01.2015**
(21) Numéro de dépôt: 09175376.4
(22) Date de dépôt: 09.11.2009
(51) Int. Cl.: B60S 1/52

(54) **Porte gicleur pour un dispositif de lavage**
Düsenhalter für eine Waschvorrichtung
Nozzle-holder for a washing device

(30) Priorité: 13.11.2008 FR 0806333
(43) Date de publication de la demande: 19.05.2010
(73) Titulaire: AML Systems, 75008 Paris (FR)
(72) Inventeur: Richiero, Jean-Louis, 93240 Stains (FR)
(74) Mandataire: Gevers France

(56) Documents cités:
- DE-A1- 10 254 224
- DE-A1-102007 007 850
- FR-A- 2 705 075
- US-B1- 6 769 630

## Description

L'invention a trait à un porte gicleur pour un dispositif de lavage escamotable, plus particulièrement pour un dispositif de lavage d'une surface transparente ou réfléchissante telle que celle d'un projecteur d'un véhicule, le dispositif étant escamotable dans une ouverture d'une surface. L'invention a trait également au dispositif en question comportant le porte gicleur.

Les dispositifs de lavage escamotables sont habituellement du type télescopique permettant le déplacement du porte gicleur vers l'avant de la surface à laver. Un tel déplacement permet au gicleur de projeter un jet de liquide de lavage sur la surface selon un angle assurant un minimum d'efficacité. Ils sont habituellement constitués d'un vérin hydraulique où le porte gicleur est fixé mécaniquement et hydrauliquement à la tige creuse du vérin. Lorsque le liquide de lavage, habituellement de l'eau avec un solvant et/ou un antigel, est alimenté sous pression via une pompe, le vérin se remplit de liquide sous pression qui exerce un effort sur le piston de la tige du vérin en vue de la déplacer vers la sortie et le liquide passe au travers de la tige creuse et alimente ainsi le porte gicleur hydrauliquement connecté à la tige creuse. Les dispositifs de lavage escamotables permettent de façon préférentielle la rentrée totale du porte gicleur dans une ouverture pratiquée dans une surface de finition.

Un tel dispositif est divulgué dans le document FR 2 778 381 et reproduit à la figure 1. Le dispositif est logé à l'intérieur de la partie avant du véhicule derrière le pare-choc 1' dans lequel une ouverture est pratiquée pour la sortie et rentrée du porte gicleur 3'. Le porte gicleur 3' comporte un enjoliveur 5' en vue de fermer de manière esthétique l'ouverture du pare-choc 1' une fois le porte gicleur 3' rentré, un dispositif de compensation ou encore de rattrapage de jeu est prévu entre le porte gicleur 3' et l'enjoliveur 5' en vue d'autoriser un déplacement relatif limité entre l'enjoliveur 5' et le porte gicleur 3'. Cette possibilité de déplacement permet à l'enjoliveur 5' de reprendre sa place dans l'ouverture et ce malgré une tolérance de positionnement du porte gicleur 3' par rapport à la surface à fermer. Ce dispositif de compensation autorise un mouvement relatif entre l'enjoliveur 5' et le porte gicleur 3' dans un plan perpendiculaire à l'axe principal du vérin 2' mais aussi selon cet axe principal. Ce dispositif comporte un porte enjoliveur 4' monté avec jeu sur une tige à l'avant du porte gicleur 3'. Un ressort monté entre le porte enjoliveur 4' et la tige agissant selon l'axe principal du vérin assure un positionnement naturel du porte enjoliveur 4' en butée contre le porte gicleur 3'. L'ensemble du dispositif de lavage est dimensionné et monté de sorte que lors du mouvement de rentrée l'enjoliveur 5' arrive en butée contre des éléments de la surface à fermer aux abords de l'ouverture avant même que la tige du vérin n'arrive en butée. En fin de course du dispositif escamotable, le porte enjoliveur 4' se déplace ainsi très légèrement par rapport au porte gicleur 3' sous la contrainte du ressort et l'enjoliveur 5' est ainsi en position de fermeture de l'ouverture sous une légère pression. Ceci permet de compenser un éventuel désajustement de la course du dispositif de lavage inhérent à différents paramètres tels que l'usure, une déformation liée à l'usage du dispositif et/ou à des vibrations. Le dispositif de compensation décrit permet une compensation similaire dans un plan perpendiculaire à l'axe du vérin à la différence près que le ressort ramène le porte enjoliveur à une position centrale par emboîtement conique. Le dispositif de compensation présente un certain encombrement et est situé entre l'enjoliveur et le gicleur si bien qu'il rallonge la longueur totale du dispositif de lavage.

Un autre dispositif de lavage du type télescopique est connu du document DE 198 24 085 A1. Le dispositif décrit dans ce document comporte de façon similaire un vérin à la tige duquel un porte gicleur est fixé. Un enjoliveur est fixé au porte gicleur au moyen d'une liaison pivotante selon un axe perpendiculaire à l'axe du vérin en vue de partiellement compenser un éventuel désajustement. Deux pointes centreuses sont également prévues sur la face intérieure de l'enjoliveur en vue de s'engager dans des orifices correspondants dans la périphérie de l'ouverture. La compensation assurée par ces mesures n'est pas satisfaisante car beaucoup trop limitée. De plus, elles n'assurent aucune compensation selon l'axe du vérin.

La course nécessaire d'un dispositif de lavage escamotable tel que ceux décrits ci avant peut s'avérer importante selon l'application. Dans le cas d'un véhicule, la course dépend directement de l'angle de la surface à laver ainsi que de la forme du pare-choc. En effet, plus la surface à laver située au dessus du dispositif de lavage est inclinée plus la course nécessaire sera grande, de sorte à amener le gicleur à distance du plan général de la surface à laver. Dans certains cas de figure une course plus importante s'avère nécessaire tout en requérant une compensation d'éventuels désajustements alors que l'espace disponible pour loger le dispositif peut être limité.

On connait encore des dispositifs décrits par les demandes de brevet US 6769630 ou FR 2705075, qui divulguent des dispositifs de lavage avec des porte-gicleurs qui se déplacent entre une position rentrée et une position de service où ils assurent la projection d'un jet sur la surface à nettoyer. Leur configuration n'est pas optimale en matière d'encombrement longitudinal.

La présente invention a pour objectif de palier les problèmes sus mentionnés, et ce par un porte gicleur pour un dispositif de lavage escamotable au travers d'une ouverture, dans une surface comprenant un corps avec une section comprise entre un embout de connexion destiné à être connecté au dispositif de lavage et une partie portant au moins un gicleur de lavage; un porte enjoliveur relié au corps et destiné à porter un enjoliveur fermant l'ouverture dans la surface lorsque le dispositif est escamoté, ledit porte-enjoliveur étant apte à coulisser sur ladite section selon l'axe longitudinal du corps et/ou à se déplacer latéralement par rapport à l'axe longitudinal et/ou à se déplacer en rotation selon l'axe longitudinal. Des moyens de compensation entre le corps et le porte enjoliveur, comprenant des moyens élastiques, permettent un mouvement relatif limité entre l'enjoliveur et le corps, en vue de permettre un positionnement exact de l'enjoliveur dans ou sur l'ouverture de la surface; où ladite section comprend une première surface d'appui du côté du gicleur et une seconde surface d'appui du côté de l'embout de connexion, les moyens élastiques étant en appui, d'une part, sur la première surface et, d'autre part, sur le porte enjoliveur, le porte enjoliveur étant en appui sur la seconde surface,et où les moyens de compensation sont situés du côté de la partie du corps portant le/les gicleur(s) correspondant à l'embout de connexion.

Cet agencement augmente la course utile du/des gicleur(s) du dispositif de lavage auquel le porte gicleur peut être connecté. En effet, il permet un rapprochement du/des gicleur(s) de l'enjoliveur, et augmente ainsi de manière correspondante la distance maximum entre le gicleur et la surface lorsque le dispositif de lavage est déployé.

Préférentiellement les moyens de compensation sont situés entre la partie du corps portant le/les gicleur(s) et l'embout de connexion du corps.

Ce positionnement est avantageux, car il permet une mise en oeuvre des moyens de compensation de manière simple, fiable, compacte et à coûts réduis.

Préférentiellement, le porte enjoliveur est relié au corps de manière coulissante entre la partie portant le/les gicleur(s) et l'embout de connexion.

Préférentiellement, la première surface d'appui est adjacente à la partie portant le/les gicleur(s).

Préférentiellement, la seconde surface d'appui est formée par un élément apte à être fixé au corps par enfourchement sur une gorge du corps.

Préférentiellement, le porte enjoliveur comporte au moins une extension latérale par rapport à l'axe longitudinal du corps, apte à recevoir l'enjoliveur à hauteur des moyens de compensation selon l'axe longitudinal du corps.

Préférentiellement, l'extension latérale du porte enjoliveur comprend un fourreau, préférentiellement avec des moyens élastiques de blocage, apte à recevoir un élément de l'enjoliveur selon un axe essentiellement parallèle à l'axe longitudinal.

Préférentiellement, les moyens élastiques de blocage comportent sur chaque fourreau un élément en forme de lamelle, préférentiellement venu de matièredu fourreau, formant une paroi du fourreau et exerçant un effort élastique latéral sur l'élément de l'enjoliveur.

Préférentiellement, le porte enjoliveur comprend une partie cylindrique ; et la section du corps recevant le porte enjoliveur comporte plusieurs nervures radiales, les extrémités radiales de ces nervures supportant la partie cylindrique du porte enjoliveur.

Préférentiellement, la partie cylindrique du porte enjoliveur comprend sur sa surface intérieure au moins un élément coopérant avec au moins une nervure, servant ainsi de butée en rotation. Alternativement, l'élément formant la seconde surface d'appui comporte une bague avec une ouverture et le porte enjoliveur comporte un élément formant butée en rotation coopérant avec au moins une surface de l'ouverture de la bague.

Préférentiellement, le porte gicleur comprend un enjoliveur avec une surface principale servant de fermeture de l'ouverture dans la surface et au moins un élément s'étendant de la surface principale essentiellement parallèlement à l'axe de déplacement du dispositif escamotable jusqu'au porte enjoliveur à hauteur des moyens de compensation.

L'invention comprend également un dispositif de lavage, notamment escamotable dans une ouverture d'une surface, et comprenant un porte gicleur tel que défini précédemment.

Le dispositif de lavage escamotable est préférentiellement destiné à laver la glace d'un projecteur d'un véhicule.

Dans la suite de la description les termes indiquant les positions de différents composants du dispositif tels que « haut », « bas », « au dessus », « en dessous », « horizontal » ou « vertical » doivent être interprétés par rapport aux représentations du dispositif selon les figures et non nécessairement par rapport à la position sur l'application. En effet le dispositif peut être monté dans d'autres positions que celle illustrée dans les figures selon l'application.
La figure 1 est une vue en coupe d'un dispositif de lavage escamotable pour projecteurs de véhicule selon l'art antérieur (FR 2 778 381).
La figure 2 est une vue en perspective d'un porte gicleur selon l'invention muni d'un premier enjoliveur.
La figure 3 est une vue selon une perspective d'un porte gicleur selon la figure 2 et muni d'un second enjoliveur.
La figure 4 est une vue en perspective et éclatée du porte gicleur selon la figure 2.
La figure 5 est une vue simplifiée en plan du dispositif de lavage selon l'invention en place dans un véhicule et en position rentrée ou encore escamotée.
La figure 6 est une simplifiée en plan du dispositif de lavage dans un véhicule correspondant à la figure 5 mais en position déployée ou encore de travail.

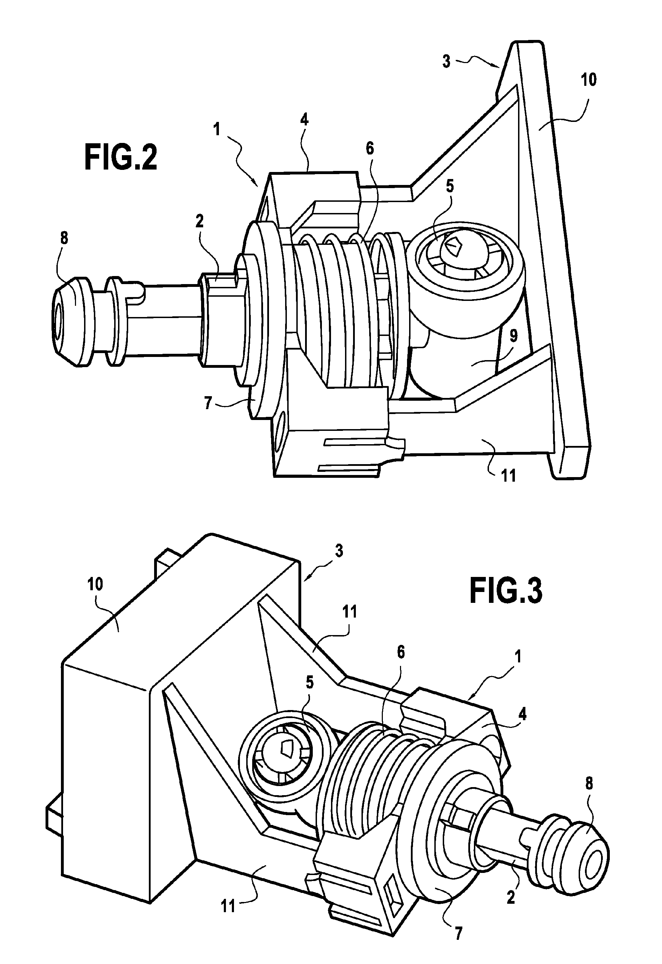

Les porte gicleurs 1 illustrés aux figures 2 et 3 sont identiques à la différence près que les enjoliveurs respectifs des portes gicleurs illustrés sont différents. Le porte gicleur comprend un corps 2, préférentiellement fait de matière plastique moulée, présentant un axe principal. Plus précisément le corps 2 comprend un embout de connexion 8 destiné à être connecté de manière étanche à un dispositif de lavage escamotable ainsi qu'une partie 9 recevant le gicleur 5. Le porte gicleur décrit ici comporte un seul gicleur mais il est à noter qu'il pourrait en porter plusieurs, par exemple deux gicleurs agencés l'un à coté de l'autre selon un axe perpendiculaire à l'axe principal du porte gicleur. Le porte gicleur comporte une partie intermédiaire entre l'embout 8 et la partie 9 recevant le gicleur destinée à recevoir un porte enjoliveur 4. Le porte enjoliveur 4 est une pièce préférentiellement faite de matière plastique injectée et montée essentiellement transversalement à l'axe principal du porte gicleur de manière coulissante selon ce même axe par rapport au corps 2. Un ressort 6 du type à spirale maintien le porte enjoliveur 4 en pression contre une butée 7. Le porte enjoliveur 4 peut donc se déplacer par rapport au porte gicleur selon son axe principal contre l'effort exercé par le ressort et de manière limitée. Un jeu est de plus prévu au niveau du montage coulissant du porte enjoliveur 4 sur le corps 2 de sorte à permettre un mouvement relatif du porte enjoliveur 4 par rapport au porte gicleur dans un plan perpendiculaire à son axe principal et dans la limite du jeu. Le ressort 6 assure une certaine pression entre le porte enjoliveur 4 et la butée 7 de sorte à ce que les forces de friction résultantes entre ces deux éléments assurent un maintien en place du porte gicleur 4 par rapport au corps 2 de porte gicleur 1. Le porte enjoliveur 4 comporte deux éléments de fixation latéraux destinés à recevoir deux éléments 11 de l'enjoliveur 3 en vue de fixer l'enjoliveur 3 sur le porte enjoliveur 4. De par cette construction, l'enjoliveur 3 est autorisé à se déplacer par rapport au porte gicleur selon son axe principal mais aussi perpendiculairement à cet axe, c'est-à-dire selon trois axes x, y et z. Ce déplacement se fait contre l'effort du moyen élastique 9 ou contre le forces de friction induites par ce moyen élastique.

Le déplacement ou mouvement relatif limité maximum est typiquement de l'ordre de 1 à 10 mm, plus particulièrement de 3 à 7 mm ou de 3 à 5 mm selon chaque axe. Cette possibilité de mouvement relatif entre l'enjoliveur et le corps du porte gicleur présente l'avantage de permettre un positionnement précis (selon une certaine tolérance) de l'enjoliveur par rapport à l'ouverture à fermer, et ce malgré certaines variations du positionnement relatif entre le porte gicleur et la surface à fermer, ces variations étant dues à divers paramètres tels que l'usure, la dilatation, la déformation,... La possibilité de mouvement relatif présente également l'avantage d'éviter ou au moins de réduire les efforts radiaux sur la tige du vérin qui, sinon, occasionneraient une usure prématurée des moyens d'étanchéité ou encore risqueraient de causer un blocage de la tige.

Les moyens de compensation, à savoir le ressort 6, la butée 7, le montage coulissant avec ou sans jeu du porte enjoliveur 4 sont donc situés exclusivement à l'arrière de la partie 9 du corps portant le gicleur, entre cette partie 9 du corps et l'embout de connexion 2.

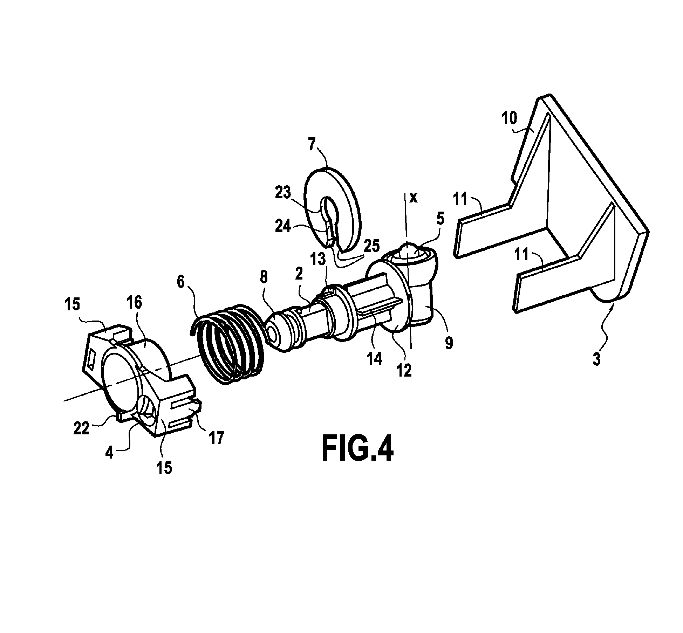

Le porte gicleur est illustré plus en détail à la vue explosée de la figure 4. Le corps 2 du porte gicleur comporte un embout de connexion 8 lui-même comportant une extrémité biseautée ou conique en vue de faciliter son insertion dans le dispositif de lavage ainsi qu'une gorge destinée à recevoir un joint en vue d'assurer une étanchéité avec le dispositif de lavage. L'embout comporte également deux méplats, afin de permettre de sécuriser le montage au moyen d'une fourche ou autre moyen de blocage amovible. L'embout comporte également une partie cylindrique avec une nervure, la partie cylindrique assurant un positionnement précis et rigide du porte gicleur par rapport au dispositif de lavage et la nervure assurant un positionnement angulaire exact du porte gicleur par rapport au dispositif de lavage. Il est à noter que d'autres dispositions équivalentes permettant un montage précis et étanche sont envisageables.

Le corps 2 comporte également une partie cylindrique située entre l'embout de connexion 8 et la partie 9 recevant le gicleur. Cette partie cylindrique comporte une série de nervures radiales 14 dont l'enveloppe est de forme généralement cylindrique. Ces nervures servent de support au porte enjoliveur 4. Elles permettent d'assurer un support d'un certain diamètre tout en évitant une présence excessive de matière. Le diamètre de l'enveloppe cylindrique de ce support est supérieur ou égal au plus grand diamètre de l'embout de connexion 8 afin de permettre le montage du porte enjoliveur par enfilement sur le corps 2 du coté embout 8. Les nervures sont au nombre de 4 mais d'autres configurations sont possibles, comme par exemple 3 ou 5 nervures ou plus encore.

La partie cylindrique du corps 2 servant de support au porte enjoliveur 4 comporte une surface d'appui 12 circulaire dans un plan perpendiculaire à l'axe principal du porte gicleur. Son diamètre est supérieur à celui de l'enveloppe cylindrique des nervures afin de servir de butée pour un ressort 6. La surface d'appui 12 est à proximité directe de la partie 9 du corps recevant le gicleur. Cette partie 9 comporte une ouverture généralement circulaire apte à recevoir un gicleur 5. Cette ouverture est géométriquement caractérisée par l'axe x qui est généralement perpendiculaire à l'axe principal du porte gicleur. Le plan de l'ouverture est généralement à distance dudit axe vers le haut. L'axe x qui correspond à l'axe principal du gicleur inséré dans cette ouverture est essentiellement perpendiculaire au plan de l'ouverture. L'axe x de l'ouverture peut être incliné par rapport à la perpendiculaire à l'axe principal du porte gicleur en fonction de la géométrie du gicleur, de ses caractéristiques et de la position et le l'angle de la surface à laver. Cette ouverture est en connexion hydraulique avec l'embout 8 afin d'alimenter le gicleur en liquide de lavage par le dispositif de lavage escamotable sur lequel le porte gicleur est destiné à être monté.

Le porte enjoliveur 4 comporte une partie cylindrique creuse 16 coulissant sur la partie cylindrique nervurée 14 du corps. Un jeu de montage est prévu, à savoir que le diamètre intérieur de la partie cylindrique 16 du porte enjoliveur est supérieur au diamètre de l'enveloppe cylindrique des nervures 14. Cette différence de diamètre correspond au jeu ou déplacement relatif maximum entre le porte enjoliveur et le porte gicleur dans un plan perpendiculaire à son axe principal. Le ressort à spirales 16 est monté sur la surface extérieure de la partie cylindrique creuse 16 du porte enjoliveur 4. Il est en butée contre le porte enjoliveur et la surface d'appui 12 du corps 2. Le diamètre de la surface d'appui 12 correspond approximativement à celui du ressort 6 ou à tout le moins est égal ou supérieur au diamètre du ressort. La longueur de la partie cylindrique creuse 16 du porte enjoliveur 4 est inférieure à celle des nervures 14. Cette différence de longueur correspond au jeu ou déplacement relatif maximum entre le porte enjoliveur et le porte gicleur selon son axe principal.

Les nervures radiales 14 sont à distance selon l'axe principal du porte gicleur d'une collerette 13 du corps ménageant ainsi une gorge recevant la butée ou bague de maintien 7. Cette butée est sous forme de fourche ou encore rondelle ouverte apte à être clipsée dans cette gorge. Il est à noter que différentes formes de butée ou arrêt ainsi que de gorge sont envisageables dans la mesure où elles assurent un arrêt du porte enjoliveur par rapport au corps tout en permettant le montage du porte enjoliveur sur le corps.

Le porte enjoliveur 4 comporte un ergot 22 en saillie coopérant avec la butée ou bague de maintien 7 en vue de limiter la rotation possible entre le porte enjoliveur et le porte gicleur. La bague de maintien 7 présente une ouverture comportant une partie circulaire 23 coopérant avec la gorge correspondante du corps du porte gicleur ainsi qu'une partie inférieure généralement droite 24 coopérant avec une partie correspondante (non représentée) du corps et empêchant la rotation de la bague par rapport au corps. L'ouverture comporte également deux surfaces de contact 25, inclinées par rapport à la partie droite. Ces surfaces 25 sont dimensionnées de sorte à coopérer en butée avec l'ergot 22 du porte enjoliveur 4. Ces surfaces 25 forment de plus un évasement de la partie droite 24 de l'ouverture ce qui facilite la mise en place de la bague 7 sur le corps 2.

Alternativement, le porte enjoliveur 4 pourrait comporter un ergot ou une nervure (non illustré) sur la face intérieure de la partie cylindrique creuse 16 coopérant avec au moins une des nervures 14 en vue de limiter la rotation possible entre le porte enjoliveur et le porte gicleur. Diverses configurations sont envisageables, comme par exemple, la présence de deux ergots ou nervures, chacune coopérant avec une des nervures 14 ou encore la présence de deux ergots ou nervures, tous deux coopérant avec une seule des nervures 14.

Le porte enjoliveur 4 comporte deux éléments de fixation 15 diamétralement opposés en vue d'y fixer l'enjoliveur 3. Celui-ci comporte deux éléments de fixation 11 s'étendant sous forme de nervures à partir de la surface 10 de fermeture et de chaque coté du porte enjoliveur. Chaque nervure 11 coopère avec un des éléments de fixation 15. Les éléments de fixation 15 sont en forme de fourreau apte à recevoir une nervure 11 de l'enjoliveur. Chaque fourreau 15 comporte une lamelle 17 élastique portant un ergot de verrouillage (non illustré) coopérant avec un creux (non illustré) prévu sur la surface correspondante de la nervure 11. La lamelle 17 constitue un coté du fourreau de sorte que son ergot de verrouillage (non illustré) coopère directement avec la surface correspondante de la nervure 11 de l'enjoliveur 3. L'enjoliveur peut donc être monté sur le porte enjoliveur par insertion des nervures 11 dans les fourreaux 15 correspondants selon un mouvement essentiellement selon l'axe principal du porte gicleur.

Il est à noter que des variantes à cette configuration pour la fixation de l'enjoliveur au porte enjoliveur sont possibles. En effet, il est envisageable que l'enjoliveur comporte un seul élément ou encore plus de deux éléments de fixation au porte enjoliveur. De plus, la direction du mouvement d'insertion du/des élément(s) de l'enjoliveur dans le/les élément(s) de fixation du porte enjoliveur peut être différente, par exemple perpendiculaire à l'axe principal du porte gicleur.

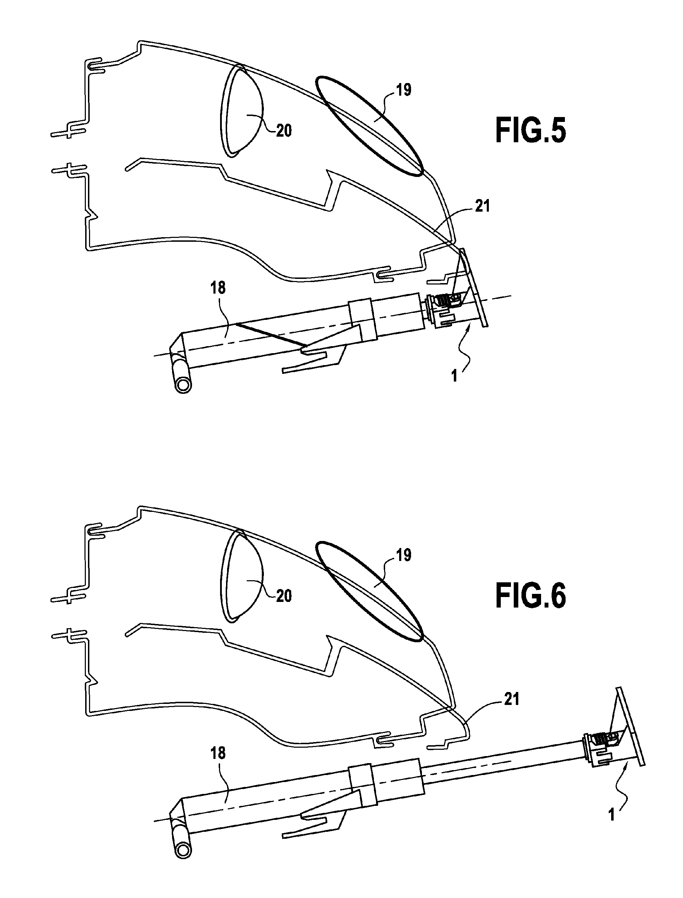

Un dispositif de lavage escamotable du type télescopique monté dans un véhicule automobile et équipé du porte gicleur décrit ci avant est illustré aux figures 5 et 6.

La figure 5 correspond à l'état escamoté, c'est-à-dire replié, du dispositif de lavage, Elle montre de manière simplifiée certains éléments de carrosserie d'un véhicule, notamment le projecteur 20 et la zone à laver 19 de sa glace de protection. Cette zone à laver correspond essentiellement à la zone éclairante de la glace de protection. Le dispositif de lavage 18 est logé dans une position légèrement inclinée par rapport à l'horizontal en dessous du projecteur 20 et de sa glace de protection et derrière la partie avant de la carrosserie 21 constituant au moins en partie le pare-choc. Le dispositif de lavage télescopique 18 est équipé du porte gicleur 1, lui-même étant équipé d'un enjoliveur fermant une ouverture pratiquée dans la carrosserie. Le dispositif est totalement caché et, plus particulièrement, le porte gicleur est positionné à proximité de l'ouverture dans la mesure où il est directement derrière l'enjoliveur fermant ladite ouverture.

La figure 6 correspond à l'état déployé du dispositif de lavage, à savoir que la tige du vérin est sortie en bout course et le gicleur est en position de lavage de la zone à laver 19. En vue d'un lavage satisfaisant il est nécessaire que l'angle entre le jet de liquide de lavage produit par le gicleur et la surface à laver soit d'au moins 5°. La figure 6 illustre bien la difficulté dans certains cas de configuration de carrosserie au niveau des projecteurs ne fut ce que de pouvoir atteindre la surface de protection du projecteur avec le jet émanant du gicleur. Ceci est particulièrement vrai lorsque la surface de protection est assez inclinée comme dans le cas des figures 5 et 6. Il alors nécessaire d'amener le gicleur le plus en avant possible afin de dépasser le plan général de la surface et d'atteindre un angle d'attaque du jet d'au moins 5°. Ceci requiert une course importante du dispositif escamotable et donc un encombrement important à l'état escamoté ou replié. Cet encombrement correspond essentiellement à la longueur du dispositif complet à l'état escamoté selon son axe principal, c'est-à-dire du fond du vérin (extrémité gauche aux figures 5 et 6) à la surface de fermeture de l'enjoliveur (extrémité droite aux figures 5 et 6). La proximité du gicleur par rapport à la surface de fermeture de l'enjoliveur optimise la longueur totale du dispositif pour un positionnement de travail donné du gicleur (en position déployé) tout en assurant une compensation d'éventuelles tolérances de positionnement de l'enjoliveur en position escamotée. En d'autres termes, le design du porte gicleur permet un rapprochement du gicleur de la surface de fermeture de l'enjoliveur tout en assurant un rattrapage de jeu, ce qui optimise l'exploitation de la course de déploiement du dispositif et donc une position plus avancée du gicleur pour une course donnée et un encombrement donné. Ceci revient à dire qu'une course plus faible permet un positionnement identique du gicleur par rapport à la surface à laver lorsque le dispositif est déployé et ce qui signifie un encombrement plus faible.

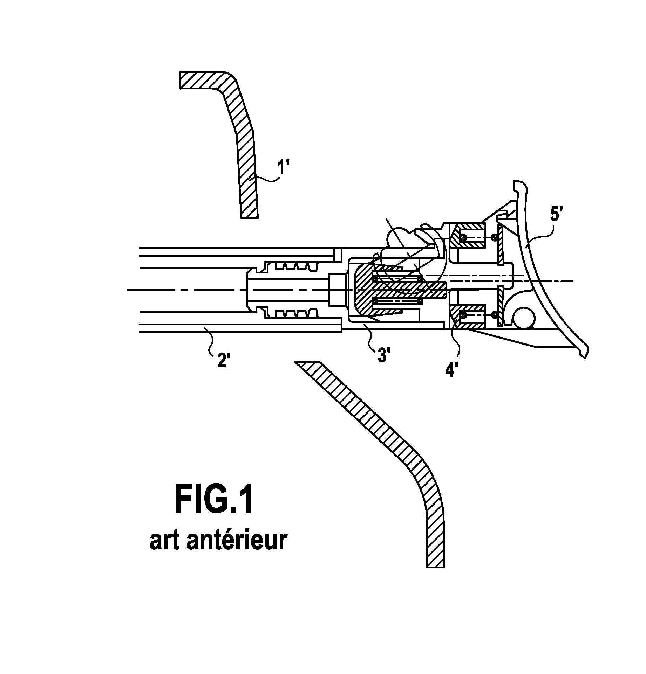

En alternative à cet exemple de réalisation où les moyens de compensation sont situés préférentiellement exclusivement entre la partie 9 du corps portant le gicleur et l'embout de connexion 2, ceux-ci peuvent s'étendre à partir de la zone entre la partie 9 du corps portant le gicleur et l'embout de connexion 2 jusqu'à la périphérie de l'embout de connexion 2, de sorte à d'avantage diminuer l'encombrement total du dispositif. Pratiquement parlant, la longueur des moyens de compensation, c'est-à-dire dans le cas des figures 1-4 la longueur de nervures 14, pourrait être reportée vers l'arrière concentriquement à l'embout de connexion. Une telle disposition permettrait de raccourcir le porte gicleur tout en assurant une compensation de positionnement de l'enjoliveur. Les moyens de compensation devraient alors être dimensionnés de sorte à pouvoir se déplacer à l'extérieur de l'extrémité du cylindre côté porte gicleur lors de la rentrée de la tige en position escamotée.

Naturellement, la description ci-dessus n'est donnée qu'à titre indicatif, et l'on pourrait adopter d'autres mises en oeuvre de l'invention sans pour autant sortir du cadre de celle-ci.

## Revendications

1. Porte gicleur (1) pour dispositif de lavage escamotable au travers d'une ouverture dans une surface, comprenant :
un corps (2) avec une section comprise entre un embout de connexion (8) destiné à être connecté au dispositif de lavage et une partie (9) portant au moins un gicleur (5) de lavage ;
un porte enjoliveur (4) relié au corps (2) et destiné à porter un enjoliveur (3) fermant l'ouverture dans la surface (21) lorsque le dispositif est escamoté ledit porte-enjoliveur étant apte à coulisser sur ladite section selon l'axe longitudinal du corps et/ou à se déplacer latéralement par rapport à l'axe longitudinal et/ou à se déplacer en rotation selon l'axe longitudinal;
des moyens de compensation entre le corps (2) et le porte enjoliveur (4) comprenant des moyens élastiques (6) et permettant un mouvement relatif limité entre l'enjoliveur (3) et le corps (2) en vue de permettre un positionnement de l'enjoliveur (3) dans ou sur l'ouverture de la surface (21);
**caractérisé en ce que**
ladite section comprend une première surface d'appui (12) du côté du gicleur (5) et une seconde surface d'appui (7) du côté de l'embout de connexion (8), les moyens élastiques (6) étant en appui, d'une part, sur la première surface (12) et, d'autre part, sur le porte enjoliveur (4), le porte enjoliveur (4) étant en appui sur la seconde surface (7).
et **en ce que** les moyens de compensation sont situés du côté de la partie (9) du corps (2) portant le/les gicleur(s) correspondant à l'embout de connexion (8).

2. Porte gicleur selon la revendication précédente, **caractérisé en ce que** les moyens de compensation sont situés entre la partie (9) du corps (2) portant le/les gicleur(s) et l'embout de connexion (8) du corps (2).

3. Porte gicleur selon l'une des revendications précédentes, **caractérisé en ce que** les moyens de compensation comprennent un ressort (6), une butée (7), et un montage coulissant avec ou sans jeu du porte enjoliveur (4).

4. Porte gicleur selon la revendication précédente, **caractérisé en ce que** le porte enjoliveur (4) est relié au corps (2) de manière coulissante entre la partie (9) portant le/les gicleur(s) et l'embout de connexion (8).

5. Porte gicleur selon l'une des revendications précédentes, **caractérisé en ce que** la première surface d'appui (12) est adjacente à la partie (9) portant le/les gicleur(s) (5).

6. Porte gicleur selon l'une des revendications précédentes, **caractérisé en ce que**
la seconde surface d'appui est formée par un élément (7) apte à être fixé au corps (2) par enfourchement sur une gorge du corps (2).

7. Porte gicleur selon l'une des revendications précédentes, **caractérisé en ce que** le porte enjoliveur (4) comporte au moins une extension latérale (15) par rapport à l'axe longitudinal du corps, apte à recevoir l'enjoliveur (3) à hauteur des moyens de compensation selon l'axe longitudinal du corps.

8. Porte gicleur selon la revendication précédente, **caractérisé en ce que** l'extension latérale (15) du porte enjoliveur (4) comprend un fourreau (15), préférentiellement avec des moyens élastiques de blocage (17), apte à recevoir un élément (11) de l'enjoliveur (3) selon un axe essentiellement parallèle à l'axe longitudinal.

9. Porte gicleur selon la revendication précédente, **caractérisé en ce que** les moyens élastiques de blocage (17) comportent sur chaque fourreau (15) un élément en forme de lamelle, préférentiellement venu de matière du fourreau, formant une paroi du fourreau et exerçant un effort élastique latéral sur l'élément (11) de l'enjoliveur (3).

10. Porte gicleur selon l'une des revendications précédentes, **caractérisé en ce que**
le porte enjoliveur (4) comprend une partie cylindrique (16);
la section du corps (2) recevant le porte enjoliveur comporte plusieurs nervures radiales (14), les extrémités radiales de ces nervures supportant la partie cylindrique (16) du porte enjoliveur (4).

11. Porte gicleur selon la revendication précédente, **caractérisé en ce que** la partie cylindrique (16) du porte enjoliveur (4) comprend sur sa surface intérieure au moins un élément coopérant avec au moins une nervure (14), servant ainsi de butée en rotation.

12. Porte gicleur selon l'une des revendications précédentes, **caractérisé en ce que** l'élément (7) formant la seconde surface d'appui comporte une bague avec une ouverture et le porte enjoliveur (4) comporte un élément (22) formant butée en rotation coopérant avec au moins une surface (25) de l'ouverture de la bague.

13. Porte gicleur selon l'une des revendications précédentes, **caractérisé en ce qu'**il comprend un enjoliveur (3) avec une surface principale (10) servant de fermeture de l'ouverture dans la surface et au moins un élément (11) s'étendant de la surface principale essentiellement parallèlement à l'axe de déplacement du dispositif escamotable jusqu'au porte enjoliveur (4) à hauteur des moyens de compensation.

14. Dispositif de lavage, notamment escamotable dans une ouverture d'une surface, comprenant un porte gicleur selon l'une des revendications précédentes.

## Patentansprüche

1. Spritzdüsenträger (1) für Waschanlage, die durch eine Öffnung in einer Oberfläche versenkbar ist, der Folgendes aufweist:
einen Körper (2) mit einem Abschnitt, der zwischen einem Verbindungsansatz (8), der dazu bestimmt ist, mit der Waschanlage verbunden zu werden, und einem Teil (9), der mindestens eine Waschspritzdüse (5) trägt, liegt;
einen Zierleistenträger (4), der mit dem Körper (2) verbunden und dazu bestimmt ist, eine Zierleiste (3) zu tragen, die die Öffnung in der Oberfläche (21) verschließt, wenn die Anlage versenkt ist, wobei der Zierleistenträger geeignet ist, um auf dem Abschnitt entlang der Längsachse des Körpers zu gleiten und/oder sich seitlich in Bezug auf die Längsachse zu bewegen und/oder sich in Drehung entlang der Längsachse zu bewegen;
Kompensationsmittel zwischen dem Körper (2) und dem Zierleistenträger (4), die elastische Mittel (6) aufweisen und eine beschränkte relative Bewegung zwischen der Zierleiste (3) und dem Körper (2) erlauben, um eine Positionierung der Zierleiste (3) in oder auf der Öffnung der Oberfläche (21) zu erlauben;
**dadurch gekennzeichnet, dass**
der Abschnitt eine erste Auflageoberfläche (12) auf der Seite der Spritzdüse (5) und eine zweite Auflageoberfläche (7) auf der Seite des Verbindungsansatzes (8) aufweist, wobei die elastischen Mittel (6) einerseits auf der ersten Oberfläche (12) und andererseits auf dem Zierleistenträger (4) aufliegen, wobei der Zierleistenträger (4) auf der zweiten Oberfläche (7) aufliegt,
und dass die Kompensationsmittel auf der Seite des Teils (9) des Körpers (2) liegen, der die Spritzdüse(n), die dem Verbindungsansatz (8) entspricht/entsprechen, trägt.

2. Spritzdüsenträger nach dem vorhergehenden Anspruch, **dadurch gekennzeichnet, dass** die Kompensationsmittel zwischen dem Teil (9) des Körpers (2), der die Spritzdüse(n) trägt, und dem Verbindungsansatz (8) des Körpers (2) liegen.

3. Spritzdüsenträger nach einem der vorhergehenden Ansprüche, **dadurch gekennzeichnet, dass** die Kompensationsmittel eine Feder (6), einen Anschlag (7) und eine Montage aufweisen, die mit oder ohne Spiel des Zierleistenträgers (4) gleitet.

4. Spritzdüsenträger nach dem vorhergehenden Anspruch, **dadurch gekennzeichnet, dass** der Spritzdüsenträger (4) mit dem Körper (2) zwischen dem Teil (9), der die Spritzdüse(n) trägt, und dem Verbindungsansatz (8) gleitend verbunden ist.

5. Spritzdüsenträger nach einem der vorhergehenden Ansprüche, **dadurch gekennzeichnet, dass** die erste Auflageoberfläche (12) neben dem Teil (9), der die Spritzdüse(n) (5) trägt, liegt.

6. Spritzdüsenträger nach einem der vorhergehenden Ansprüche, **dadurch gekennzeichnet, dass**
die zweite Auflageoberfläche aus einem Element (7) ausgebildet ist, das geeignet ist, um an dem Körper (2) durch Überspannen auf einer Hohlkehle des Körpers (2) befestigt zu sein.

7. Spritzdüsenträger nach einem der vorhergehenden Ansprüche, **dadurch gekennzeichnet, dass** der Zierleistenträger (4) mindestens eine seitliche Erweiterung (15) in Bezug auf die Längsachse des Körpers aufweist, die geeignet ist, um die Zierleiste (3) in der Höhe der Kompensationsmittel entlang der Längsachse des Körpers aufzunehmen.

8. Spritzdüsenträger nach dem vorhergehenden Anspruch, **dadurch gekennzeichnet, dass** die seitliche Erweiterung (15) des Zierleistenträgers (4) eine Hülse (15) aufweist, vorzugsweise mit elastischen Blockierungsmitteln (17), die angepasst ist, um ein Element (11) der Zierleiste (3) entlang einer im Wesentlichen zu der Längsachse parallelen Achse aufzunehmen.

9. Spritzdüsenträger nach dem vorhergehenden Anspruch, **dadurch gekennzeichnet, dass** die elastischen Blockierungsmittel (17) auf jeder Hülse (15) ein Element in Lamellenform aufweisen, vorzugsweise aus einem Stück mit der Hülse gebildet, das eine Wand der Hülse bildet und eine elastische seitliche Kraft auf das Element (11) der Zierleiste (3) ausübt.

10. Spritzdüsenträger nach einem der vorhergehenden Ansprüche, **dadurch gekennzeichnet, dass**
der Zierleistenträger (4) einen zylindrischen Teil (16) aufweist;
der Abschnitt des Körpers (2), der den Zierleistenträger aufnimmt, mehrere radiale Rippen (14) aufweist, wobei die radialen Enden dieser Rippen den zylindrischen Teil (16) des Zierleistenträgers (4) tragen.

11. Spritzdüsenträger nach dem vorhergehenden Anspruch, **dadurch gekennzeichnet, dass** der zylindrische Teil (16) des Zierleistenträgers (4) auf seiner inneren Oberfläche mindestens ein Element aufweist, das mit mindestens einer Rippe (14), die daher als Rotationsanschlag dient, zusammenwirkt.

12. Spritzdüsenträger nach einem der vorhergehenden Ansprüche, **dadurch gekennzeichnet, dass** das Element (7), das die zweite Auflageoberfläche bildet, einen Ring mit einer Öffnung aufweist, und dass der Zierleistenträger (4) ein Element (22), das einen Rotationsanschlag bildet, der mit mindestens einer Oberfläche (25) der Öffnung des Rings zusammenwirkt, aufweist.

13. Spritzdüsenträger nach einem der vorhergehenden Ansprüche, **dadurch gekennzeichnet, dass** er eine Zierleiste (3) mit einer Hauptoberfläche (10), die als Verschluss der Öffnung in der Oberfläche dient, und mindestens ein Element (11), das sich von der Hauptoberfläche im Wesentlichen parallel zu der Bewegungsachse der versenkbaren Anlage bis zu dem Zierleistenträger (4) auf Höhe der Kompensationsmittel erstreckt, aufweist.

14. Waschanlage, die insbesondere in eine Öffnung einer Oberfläche, die einen Spritzdüsenträger nach einem der vorhergehenden Ansprüche aufweist, versenkbar ist.

## Claims

1. Jet holder (1) for a washing device which is retractable through an opening in a surface, comprising:
a body (2) having a section located between a connection end-piece (8) adapted to be connected to the washing device and a part (9) carrying at least one washing jet (5);
a cover carrier (4) connected to the body (2) and adapted to carry a cover (3) which closes off the opening in the surface (21) when the device is retracted, said cover carrier being adapted to slide over said section along the longitudinal axis of the body and/or to move laterally relative to the longitudinal axis and/or to move in rotation along the longitudinal axis;
compensating means between the body (2) and the cover carrier (4) comprising resilient means (6) and allowing a limited relative movement between the cover (3) and the body (2) in order to allow positioning of the cover (3) in or on the opening in the surface (21);
**characterised in that**
said section comprises a first support surface (12) on the jet side (5) and a second support surface (7) on the side of the connection end-piece (8), the resilient means (6) bearing on the first surface (12), on the one hand, and on the cover carrier (4), on the other hand, the cover carrier (4) bearing on the second surface (7),
and **in that** the compensating means are located on the side of the part (9) of the body (2) which carries the jet(s) corresponding to the connection end-piece (8).

2. Jet holder according to the preceding claim, **characterised in that** the compensating means are located between the part (9) of the body (2) carrying the jet(s) and the connection end-piece (8) for the body (2).

3. Jet holder according to one of the preceding claims, **characterised in that** the compensating means comprise a spring (6), a stop (7), and a mount for the cover carrier (4) sliding with or without play.

4. Jet holder according to the preceding claim, **characterised in that** the cover carrier (4) is connected to the body (2) so as to slide between the part (9) carrying the jet(s) and the connection end-piece (8).

5. Jet holder according to one of the preceding claims, **characterised in that** the first support surface (12) is adjacent to the part (9) carrying the jet(s) (5).

6. Jet holder according to one of the preceding claims, **characterised in that** the second support surface is formed by an element (7) adapted to be fixed to the body (2) by bestriding with a groove in the body (2).

7. Jet holder according to one of the preceding claims, **characterised in that** the cover carrier (4) comprises at least one lateral extension (15) relative to the longitudinal axis of the body, adapted to receive the cover (3) level with the compensating means along the longitudinal axis of the body.

8. Jet holder according to one of the preceding claims, **characterised in that** the lateral extension (15) of the cover carrier (4) comprises a sheath (15), preferably with resilient locking means (17), adapted to receive an element (11) of the cover (3) along an axis which is essentially parallel to the longitudinal axis.

9. Jet holder according to one of the preceding claims, **characterised in that** the resilient locking means (17) comprise, on each sheath (15), an element in the shape of a lamella, preferably integrally formed with the sheath, forming a wall of the sheath and exerting a lateral resilient force on the element (11) of the cover (3).

10. Jet holder according to one of the preceding claims, **characterised in that** the cover carrier (4) comprises a cylindrical portion (16);
the section of the body (2) receiving the cover carrier comprises a plurality of radial ribs (14), the radial ends of these ribs supporting the cylindrical portion (16) of the cover carrier (4).

11. Jet holder according to the preceding claim, **characterised in that** the cylindrical portion (16) of the cover carrier (4) comprises on its inner surface at least one element cooperating with at least one rib (14), thus acting as a rotation stop.

12. Jet holder according to one of the preceding claims, **characterised in that** the element (7) forming the second support surface comprises a ring with an opening and the cover carrier (4) comprises an element (22) forming a rotation stop cooperating with at least one surface (25) of the opening of the ring.

13. Jet holder according to one of the preceding claims, **characterised in that** it comprises a cover (3) with a main surface (10) serving to close off the opening in the surface, and at least one element (11) extending from the main surface essentially parallel to the axis of movement of the retractable device as far as the cover carrier (4) level with the compensating means.

14. Washing device which is in particular retractable into an opening in a surface, comprising a jet holder according to one of the preceding claims.
